# EUROPÄISCHE PATENTSCHRIFT

(11) **EP 0 548 733 B1**
(45) Veröffentlichungstag und Bekanntmachung des Hinweises auf die Patenterteilung: **17.04.1996**
(21) Anmeldenummer: 92121269.2
(22) Anmeldetag: 14.12.1992
(51) Int. Cl.: H02K 5/132

(54) **Elektromotor geeignet für Tauchbetrieb**
Electric motor applicable for submerged running
Moteur électrique propre à être utilisé en immersion

(30) Priorität: 23.12.1991 DE 4142827; 20.03.1992 DE 4209118
(43) Veröffentlichungstag der Anmeldung: 30.06.1993
(73) Patentinhaber: LOHER AKTIENGESELLSCHAFT, D-94095 Ruhstorf (DE)
(72) Erfinder: Köhler, Manfred, Dipl.-Ing., W-8399 Ruhstorf a.d.Rott (DE); Kuder, Roland, Dipl.-Ing., W-8390 Passau 18 (DE)
(74) Vertreter: Zinnecker, Armin, Dipl.-Ing.

(56) Entgegenhaltungen:
- EP-A- 0 297 274
- CH-A- 574 685
- DE-A- 3 230 699
- DE-C- 2 928 393
- GB-A- 585 542
- US-A- 3 060 335
- US-A- 4 673 835

## Beschreibung

Die Erfindung betrifft einen Elektromotor nach dem Oberbegriff des Anspruchs 1. Insbesondere betrifft die Erfindung einen Elektromotor für Unterwasserantriebe und hohe Gasdrücke im Motorinnenraum.

Der Elektromotor besitzt ein Motor-Druckgehäuse, in dem ein Ständer eingebaut und ein Rotor drehbar gelagert ist. Der Ständer besteht im allgemeinen aus einem Ständerblechpaket und einer Ständerwicklung. An dem Motor-Druckgehäuse ist ferner üblicherweise ein Anschlußkasten vorhanden. Das Motor-Druckgehäuse ist mit Gas unter hohem Druck gefüllt. Der Gasdruck kann zwischen 5 und 150 bar, aber auch noch höher, liegen.

Für Unterwasseranlagen, z.B. zur Erdöl- und Erdgasförderung, besonders in großen Wassertiefen, werden Elektromotoren eingesetzt, die je nach Antriebskonzept mit einem flüssigen oder gasförmigen Medium gefüllt sind. Das Motor-Druckgehäuse dieser Antriebe ist so konstruiert, daß es auch dem Druck in großen Wassertiefen standhalten kann.

Ein Elektromotor der eingangs angegebenen Art ist aus der DE 39 25 337 A 1 bekannt.

Ein wesentlicher Nachteil bei dem vorbekannten, gasgefüllten Motor besteht darin, daß die Rotor- und Lüfterkonstruktion für die jeweiligen Kühlsysteme bei hohem Gasdruck im Motorinnenraum hohe Reibungsverluste verursacht und dadurch die Motorverlustwärme nicht ausreichend abgeführt werden kann.

Aus der DE 37 29 486 C1 ist ein Elektromotor bekannt, der mit einem Kompressor in einem gemeinsamen Druckgehäuse eingebaut ist. Das Druckgehäuse und der Motor sind gasgefüllt. Zur Motorkühlung durchströmt das Gas den Motor und einen Ringkühler, der das Gehäuse konzentrisch umgibt.

Aus der EP 0 297 274 und der älteren, nicht vorveröffentlichten deutschen Patentanmeldung P 41 00 135.4-32 ist ein Elektromotor bekannt, der zusammen mit der anzutreibenden Maschine in einem wasserdicht gekapselten Gehäuse eingesetzt ist. Das Druckgehäuse ist mit einem gasförmigen oder flüssigen Medium gefüllt. Dieses Füllmedium umgibt den Motor, der wassergefüllt oder ölgefüllt ist.

Obwohl die vorbekannten Motoren in bestimmten Einsatzgebieten erfolgreich sind, sind sie in Bezug auf die hohen Reibungsverluste sowie die aufwendigen Druckausgleichseinrichtungen und Kühlsysteme nicht zufriedenstellend.

Aus der DE-PS 29 45 194 ist ein Elektromotor bekannt, bei dem auf der Läuferwelle Scheiben befestigt sind, die mit der Läuferwelle rotieren und die derart auf der Läuferwelle angeordnet sind, daß zwischen dem die Bohrung des Ständers radial überragenden Teil der rotierenden Scheiben und den Stirnseiten des Ständerblechpaketes jeweils ein schmaler axialer Spalt besteht. Infolge der hohen Drehzahl der Läuferwelle wird bei den rotierenden Scheiben in dem die Bohrung des Ständers radial überragenden Bereich dieser Scheiben die Luft aus dem axialen Spalt nach außen geschleudert, wodurch in der Bohrung des Ständers eine Luftverdünnung entsteht, die zu einer Reduzierung der Luftreibungsverluste führt. Die Pumpwirkung der rotierenden Scheiben wird noch dadurch verstärkt, daß auf der dem Ständerblechpaket zugekehrten Seite der Scheiben Förderrillen vorgesehen sind. Bei der DE-PS 29 45 194 führt die Gasverdünnung zur Reduzierung der Gasreibungsverluste.

Auch bei dem aus der DE-PS 427 917 bekannten Elektromotor werden die Gasreibungsverluste durch Luftverdünnung reduziert.

Die in der DE-PS 29 45 194 und der DE-PS 427 917 beschriebenen Lösungen sind allerdings bei Motoren mit hohen Gasdrücken innerhalb des Gehäuses nicht anwendbar.

Aus der DE-PS 29 28 393 ist ein Generator bekannt, der ein Gehäuse aus Aluminium aufweist, in dem ein Ständer befestigt und ein Läufer relativ zum Ständer drehbar montiert ist. Damit der Ständer über einen großen Betriebstemperaturbereich in seiner Lage festgehalten werden kann und um eine verbesserte Kühlung zu erreichen, hat der Ständer eine Außenfläche, die über den gesamten Betriebstemperaturbereich des Generators im Preßsitz an einer Innenfläche des Gehäuses anliegt. In einer der Flächen ist eine Mehrzahl von Längsnuten ausgebildet, so daß das Gehäuse im Bereich der Längsnuten biegbar ist, wenn der Generator im unteren Abschnitt des Temperaturbereichs läuft. Die Längsnuten sind erforderlich, damit die elektrische Maschine über den gesamten Betriebstemperaturbereich einsatzfähig ist, und zwar trotz der Verwendung von Werkstoffen mit stark unterschiedlichen Wärmeausdehnungszahlen. Diese Lösung ist allerdings für einen Hochdruckmotor nicht geeignet.

Aus der GB-A-585 542 ist ein Elektromotor mit einem Druckgehäuse bekannt, dessen Rotor beidseitig zum Umschließen der Kurzschlußringe mit Kapseln versehen ist. Bei diesem Motor sind allerdings die Rotorstäbe nicht von der Kapsel umschlossen, da sie nicht von dem Rotorblechpaket hinausragen.

Das Dokument DE-A-3 230 699 beschreibt einen gewickelten Rotor, der in Betrieb von einer Flüssigkeit umströmt ist. Zur Verminderung der Verwirbelungsverluste sind die Wickelköpfe des Läufers mit Isolierkappen abgedeckt.

Hiervon ausgehend liegt der Erfindung die Aufgabe zugrunde, einen Elektromotor der eingangs angegebenen Art zu schaffen, bei dem die anfallende Verlustwärme geringer ist.

Erfindungsgemäß wird diese Aufgabe durch die im kennzeichnenden Teil des Anspruchs 1 angegebenen Merkmale gelöst. Der Elektromotor besitzt eine Kapsel, die die Rotorstäbe umschließt. Die Kapsel kann antriebsseitig und/oder nebenseitig angeordnet sein.

Durch die Kapsel werden die Rotorstäbe abgedeckt. Diese Rotorstäbe wirken ohne Abdeckung wie ein Ventilator. Durch die durch die Kapsel bewirkte Abdeckung wird diese Wirkung verhindert. Die anfallende Verlustwärme wird dadurch erheblich reduziert.

Der Rotor ist als Kurzschlußkäfig ausgebildet. Die Rotorstäbe reichen über das Blechpaket des Rotors hinaus. Durch die Kapselung der Rotorstäbe (Läuferstäbe) wird eine ansonsten durch diese Rotorstäbe verursachte Gasbewegung und Gasverwirbelung im Motorinneren verhindert und dadurch die Reibungsverlustwärme reduziert. Durch die erfindungsgemäße Kapselung ist sichergestellt, daß sich das Gas auch innerhalb der Kapsel nicht verwirbelt und daß die Ventilatorwirkung der Rotorstäbe, also eine Gasumwälzung innerhalb des Motors, verhindert wird. Dabei ist die Anordnung der Kapsel vorzugsweise derart getroffen, daß die Wärmebewegung der Rotorstäbe uneingeschränkt möglich ist. Die bekannte Käfigläuferkonstruktion mit herausgeführten, also das Blechpaket des Rotors überragenden Rotorstäben wird vorzugsweise bei Motoren verwendet, die hohen mechanischen, elektrischen und thermischen Beanspruchungen ausgesetzt sind. Bei Motoren ohne Überdruck im Motorinneren kann die Lüfterwirkung der Läuferstäbe zur Motorkühlung genutzt werden. Bei Motoren mit Überdruck im Motorinneren wird die erfindungsgemäße Lösung angewendet.

Die Passungen an der Kapsel und an den jeweiligen Abschlußstellen, also an denjenigen Stellen, an denen die Kapsel an anderen Bauteilen anliegt, sind vorzugsweise so festgelegt, daß eine Gasbewegung (Gasstrom) innerhalb des Motors über die Rotorstäbe und durch die Spalte an der Kapsel ausgeschlossen ist und daß die Verschiebbarkeit des Kurzschlußkäfigs durch die Wärmeausdehnung der Rotorstäbe (Läuferstäbe) sichergestellt ist sowie ein Druckausgleich durch die Spalte zwischen der Kapsel und den Verbindungsstellen, also denjenigen Stellen, an denen die Kapsel mit anderen Bauteilen verbunden ist, ermöglicht wird.

Dadurch, daß die Kapsel die Rotorstäbe umschließt, kann der im vorzugsweise verdichteten Gas drehende Rotor keine schädliche Reibungswärme erzeugen. Ferner können die Rotorstäbe keinen Gasstrom erzeugen und damit auch keine Druckerhöhung verursachen. Die Kühlung des Unterwassermotors - hierzu wird die niedrige Temperatur des Wassers genutzt - erfolgt durch Wärmeleitung. Da wesentlich weniger Verlustwärme erzeugt wird, werden kein Kühlwasserstrom an der Motoroberfläche und kein Kühlkreislauf im Motorinnenraum und damit auch keine Kühlkanäle im Motor und keine Kühlrippen und Kühlrohre oder andere Wärmetauscher am Motordruckgehäuse benötigt. Die Konstruktion des Motors und des Druckgehäuses wird einfacher und zuverlässiger durch die Art der Kühlung, durch die Rotorausführung und die Ständerpaketanordnung.

Durch den erfindungsgemäßen Elektromotor wird sichergestellt, daß auch bei hohen Motorinnendrücken - von 5 bis 150 bar und höher - die durch den drehenden Rotor entstehenden Gasreibungsverluste ausreichend niedrig bleiben, so daß sich der Elektromotor nicht überhitzt. Der erfindungsgemäße Elektromotor ist damit als gasgefüllter Elektromotor besonders geeignet als Unterwassermotor für hohe Motorinnendrücke.

Vorteilhafte Weiterbildungen sind in den Unteransprüchen beschrieben.

Vorteilhaft ist es, wenn die Kapsel die Kurzschlußringe antriebsseitig und/oder nebenseitig umschließt. Hierdurch wird die Wirkung der Kapsel weiter verbessert. Die Erzeugung von schädlicher Reibungswärme wird weiter vermindert, so daß die anfallende Verlustwärme noch geringer ist.

Vorzugsweise schließt die Kapsel an den Läuferendblechen ab. Auch hierdurch wird die reibungsvermindernde Wirkung der Kapsel weiter verbessert. Insbesondere wird hierdurch auch die Läuferdruckplatte an ihrem Außenumfang abgedeckt. Die Rotorstäbe durchsetzen diese Läuferdruckplatte. Um dies zu ermöglichen, ist die Läuferdruckplatte im allgemeinen an ihrem äußeren Umfang geschlitzt, wobei für jeden Rotorstab ein Schlitz vorhanden ist. Die Schlitze erzeugen bei der Rotordrehung Verlustwärme. Wenn die Kapsel die Läuferdruckplatte überdeckt, wird diese Verlustwärme vermieden.

Nach einer weiteren vorteilhaften Weiterbildung schließt die Kapsel auf der Welle ab. Auch hierdurch wird die anfallende Verlustwärme verringert.

Nach einer weiteren vorteilhaften Weiterbildung schließt die Kapsel an der Läuferdruckplatte ab. Die Läuferdruckplatte kann zu diesem Zweck einen zur Welle koaxialen Vorsprung bzw. Ansatz aufweisen. In entsprechender Weise kann die Kapsel einen zur Welle koaxialen, zur Läuferdruckplatte hin weisenden Vorsprung bzw. Ansatz aufweisen, der den entsprechenden Ansatz der Läuferdruckplatte überdecken kann.

Nach einer weiteren vorteilhaften Weiterbildung ist in betriebskaltem Zustand zwischen Motor-Druckgehäuse und Ständerblechpaket ein Spalt vorhanden, der derart bemessen ist, daß sich in betriebswarmem Zustand an dieser Stelle ein Preßsitz einstellt. Zwischen Motor-Druckgehäuse und Ständerblechpaket ist also in kaltem Zustand ein Spalt vorhanden; der für die Wärmeleitung an dieser Stelle nötige spielfreie Sitz stellt sich in betriebswarmem Zustand ein, wodurch ein überzogener Preßsitz und damit gefährliche zusätzliche mechanische Spannungen im Druckgehäuse und im Ständerblechpaket vermieden werden, welche ansonsten durch große Temperaturunterschiede zwischen Wicklung und Motorgehäusewand verursacht werden. Die anfallende Verlustwärme kann besser abgeleitet werden.

Vorzugsweise sind die in der DE-PS 29 28 393 gezeigten Längsnuten am Außenumfang des Rotors nicht vorhanden. Hierduch ist die Wärmeleitung im betriebswarmen Zustand nicht unterbrochen. Im Betriebstemperaturbereich liegt also die Außenfläche des Rotors vollständig spaltfrei an der Innenfläche des Stators an. Zu diesem Zweck sind vorzugsweise die Spaltflächen zwischen Gehäuse (Stator) und Rotor (Außenfläche des Ständerblechpakets) vollflächig mechanisch bearbeitet.

Die Läuferendbleche können verstärkt sein.

Die Anlageflächen für die Kapsel können mechanisch bearbeitet sein. Vorzugsweise sind sowohl der Durchmesser als auch die Stirnflächen der Anlageflächen für die Kapsel mechanisch bearbeitet.

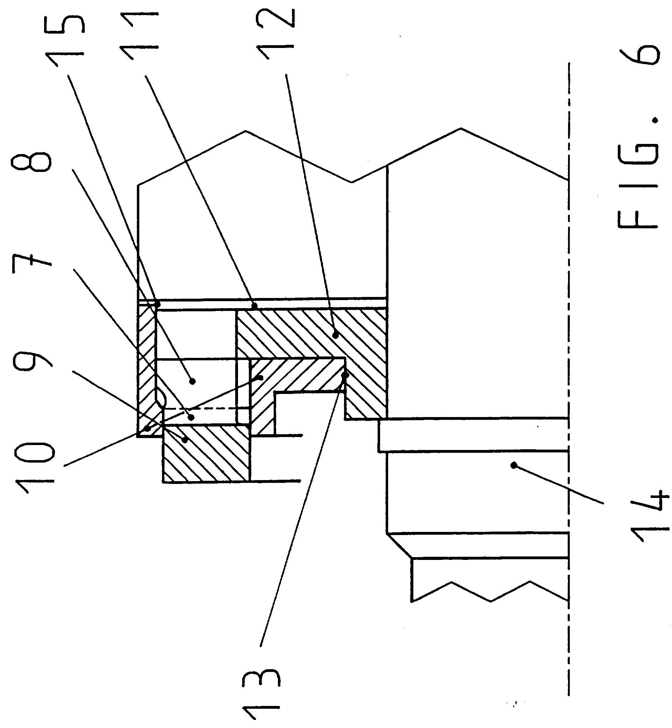

Die Kapsel kann an der Außenseite der Rotorstäbe, am Umfang der Läuferdruckplatten und/oder an mindestens zwei Flächen der Kurzschlußringe anliegen. Die Kapsel liegt deshalb an der Außenseite der Rotorstäbe an, damit sich das Gas innerhalb der Kapsel mit den Rotorstäben dreht und nicht verwirbelt werden kann. Diese Maßnahme trägt zur Reduzierung der Gasreibungsverluste bei. Statt dessen oder zusätzlich kann die Kapsel auch am Umfang der Läuferdruckplatten anliegen. Ferner kann die Kapsel statt dessen oder zusätzlich an mindestens zwei Flächen der Kurzschlußringe anliegen. Dies kann in der Weise geschehen, daß die Kapsel den Kurzschlußring umschließt, den Kurzschlußring also in sich einschließt. Es kann aber auch in der Weise geschehen, daß die Kapsel zum einen an der Außenfläche und zum anderen an der Innenfläche des Kurzschlußrings anliegt. In diesem Fall ist der Kurzschlußring nicht gekapselt; er ist vielmehr Bestandteil der Kapselung (siehe unten Fig. 6).

Eine weitere vorteilhafte Weiterbildung ist dadurch gekennzeichnet, daß der Rotor, bestehend aus Welle, Läuferblechpaket mit Kurzschlußkäfig und Kapseln, glatte, mit hoher Rundlauf- und Oberflächengenauigkeit hergestellte Stirn- und Mantelflächen ohne Nuten und Lüfterschaufeln besitzt. Der Rotor ist mit glatten Stirn- und Mantelflächen mit hoher Rundlauf- und Oberflächengenauigkeit, aber ohne Lüfterflügel und Kühlkanäle hergestellt.

Die Stirn- und Mantelflächen der Kapseln und des Läuferblechpaketes können metallisch oder nicht-metallisch beschichtet sein.

Vorzugsweise ist das Ständerblechpaket mit Preßringen und eingeschweißten Klammern oder einem Stahlring zusammengehalten und ist die Spaltfläche zum Motor-Druckgehäuse vollflächig mechanisch bearbeitet.

Nach einer weiteren vorteilhaften Weiterbildung ist das Ständerblechpaket an einer Seite im Motor-Druckgehäuse mit Schrauben oder mit einer formschlüssigen Verbindung befestigt.

Eine weitere vorteilhafte Weiterbildung ist dadurch gekennzeichnet, daß das Motor-Druckgehäuse mit glatten Außenflächen ohne Kühlrippen und ohne Kühlrohre ausgeführt ist, allerdings gegebenenfalls mit Hebevorrichtungen (Tragösen).

An den freien Innenseiten des Motor-Druckgehäuses kann eine wärmeleitende Beschichtung oder eine oberflächenvergrößernde wärmeleitende Vorrichtung vorhanden sein.

Vorzugsweise sind an der Innenseite des Motor-Druckgehäuses in einer Tasche des Ständerblechpaketes ein oder mehrere Thermometer, beispielsweise Widerstandsthermometer, eingebettet.

Eine weitere vorteilhafte Weiterbildung ist dadurch gekennzeichnet, daß Verbindungsleitungen zwischen B-seitigen Überwachungs- und und Steuereinrichtungen und Anschlußraum in einer zum Gehäuse offenen Nut im Ständerblechpaket verlegt sind.

An den Lagern, Lagerschilden, Kapseln und dem Anschlußraum können Druckausgleichseinrichtungen vorhanden sein.

Vorzugsweise ist das Motor-Druckgehäuse derart gas- und wasserdicht ausgeführt, daß der Gasdruck innerhalb des Gehäuses höher sein kann als der Außendruck und daß auch der Wasserdruck außerhalb des Gehäuses größer sein kann als der Gasinnendruck.

Das Motor-Druckgehäuse kann mit Schutzgas oder mit einem Fördermedium, beispielsweise Erdgas, gefüllt sein.

Vorzugsweise ist der Motor ein Asynchronmotor mit Käfigläufer.

Das Motor-Druckgehäuse kann in Verbindung mit dem Getriebegehäuse und dem Gehäuse der angetriebenen Maschine eine Einheit bilden.

Vorteilhafterweise ist der Motor zum Antrieb eines Kompressors oder einer Pumpe oder eines Separators ausgeführt.

Zwischen Motor und Getriebe oder Gehäuse der angetriebenen Maschine kann eine druckdichte Platte und eine Dichtung eingebaut sein.

Ein Ausführungsbeispiel der Erfindung wird nachstehend anhand der beigefügten Zeichnung im einzelnen beschrieben. In der Zeichnung zeigt
- Fig. 1: einen Motor im Längsschnitt,
- Fig. 2: einen Teilschnitt durch den Rotor,
- Fig. 3: einen Teilschnitt durch das Motor-Druckgehäuse und das Ständerblechpaket,
- Fig. 4: einen Teilschnitt durch den Motor mit AS-Lager und Dichtung,
- Fig. 5: ein weiteres Ausführungsbeispiel in einem der Fig. 2 entsprechenden Teilschnitt durch den Rotor und
- Fig. 6: ein weiteres Ausführungsbeispiel in einem den Fig. 2 und 5 entsprechenden Teilschnitt durch den Rotor.

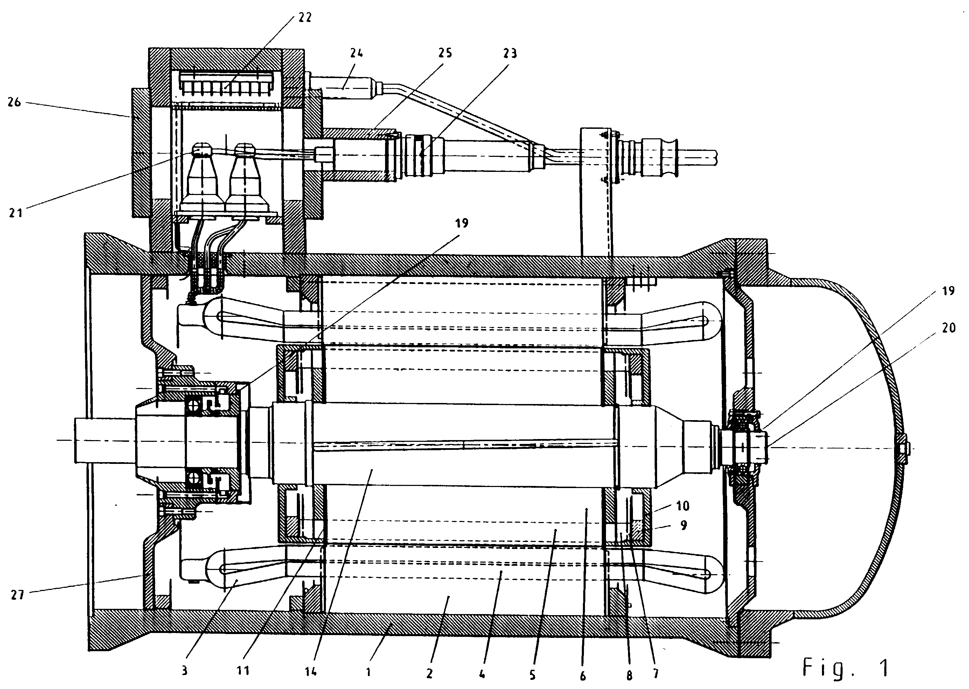

Der in der Fig. 1 dargestellte Motor besteht aus einem Motor-Druckgehäuse 1 mit Anschlußkasten 26, einem Ständerblechpaket 2 mit Ständerwicklung 3 und einem Rotor 5 mit Kurzschlußkäfig 8, 9. Der Motor ist mit Gas unter hohen Drücken zwischen 5 und 150 bar oder höher gefüllt. Die Füllung besteht aus Schutzgas oder Fördermedium, z.B. Erdgas. Der Rotor 5 mit Welle 14 und Kurzschlußkäfig 8, 9 ist im Motor drehbar gelagert. Der Rotor 5 ist mit glatten Stirn- und Mantelflächen mit hoher Rundlauf- und Oberflächengenauigkeit hergestellt, wobei der Kurzschlußkäfig bestehend aus Rotorstäben 8 und Kurzschlußringen 9 völlig umschlossen ist, damit der im verdichteten Gas drehende Rotor keine schädliche Reibungswärme und in Verbindung mit den Rotorstäben 8 keinen Gasstrom erzeugt und keine Druckerhöhung verursacht. Das Ständerblechpaket 2 ist stirnseitig im Motor-Druckgehäuse 1 mit Schrauben oder mit einer formschlüssigen Verbindung befestigt. Für den Anschluß der Motorwicklung 3 und der Steuer- und Überwachungseinrichtungen (in Fig. 1 nicht dargestellt) ist je ein Anschlußraum 21, 22 vorhanden. Die Leitungseinführungen 23, 24 sind wasser- und gasdicht. Der Motor wird mit Wasser gekühlt, welches die Motoroberfläche umgibt. Die Ableitung der Verlustwärme aus Rotor 5, 6, 8, 9, 10, Ständer 4, 2, Wickelköpfen 3 und Lager erfolgt durch Wärmeleitung. Die Auslegung der Gehäuseoberfläche (Kühlfläche) ohne Kühlrippen und ohne zusätzlichen Wärmetauscher, z.B. Kühlrohre, ermöglicht die ausreichende Wärmeleitfähigkeit von Stahl und Wasser.

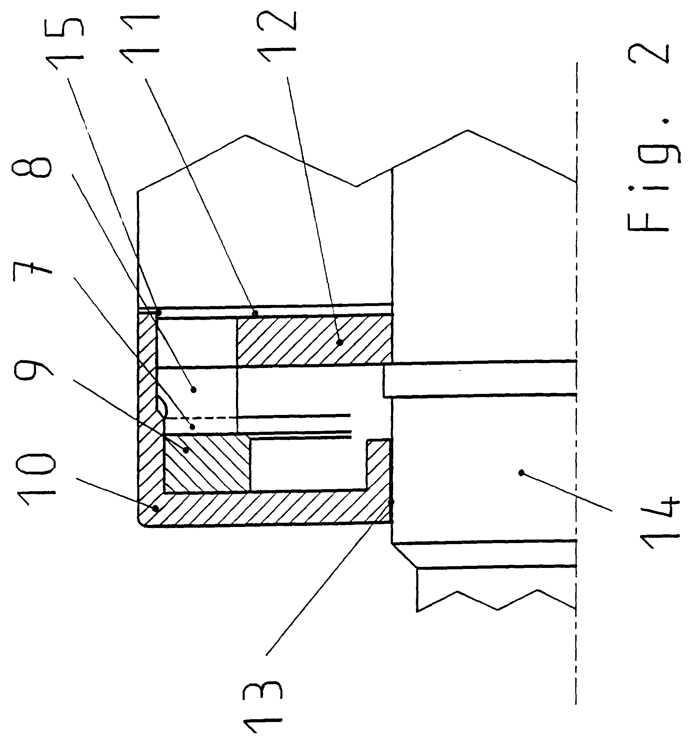

Fig. 2 zeigt einen Teilschnitt durch den Rotor 5. Die Rotorstäbe 8 und die Kurzschlußringe 9 sind mit einer an den Läuferendblechen 11 und auf der Welle 14 abschließenden Kapsel 10 aus unmagnetischem Werkstoff antriebsseitig (AS) und nebenseitig (BS) umschlossen, die Läuferendbleche 11 sind verstärkt und die Anlageflächen 15 für die Kapsel 10, und zwar Durchmesser und Stirnflächen, sind mechanisch bearbeitet. Die Kapsel 10 liegt an der Außenseite der Rotorstäbe 8, am Umfang der Läuferdruckplatten 12 und an mindestens zwei Flächen der Kurzschlußringe 9 an.

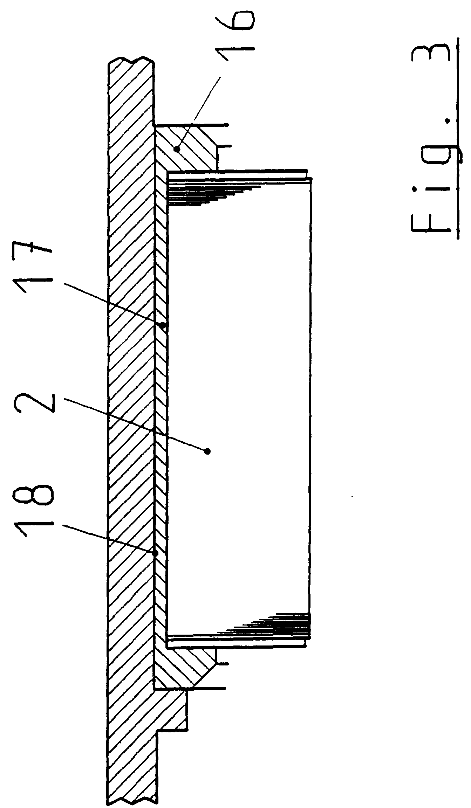

Fig. 3 zeigt einen Teilschnitt duch das Ständerblechpaket 2. Zwischen Motordruckgehäuse 1 und Ständerblechpaket 2 ist in kaltem Zustand ein Spalt 18 vorhanden. Der für die Wärmeleitung an dieser Stelle nötige spielfreie Sitz stellt sich im betriebswarmen Zustand ein, wodurch ein überzogener Preßsitz und damit gefährliche zusätzliche mechanische Spannungen im Druckgehäuse und im Ständerblechpaket vermieden werden.

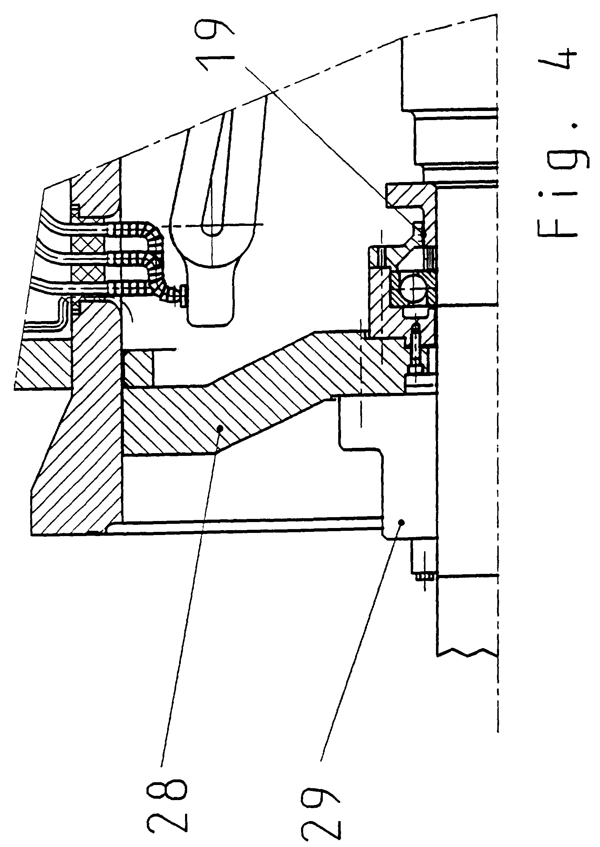

Fig. 4 zeigt eine vorteilhafte Weiterbildung der Antriebsseite. Bei Bedarf kann der Motor mit Hilfe einer Platte 28 und einer Dichtung 29, z.B. einer Gleitringdichtung, gegen das Getriebe oder die angetriebene Maschine druckdicht abgeschottet werden.

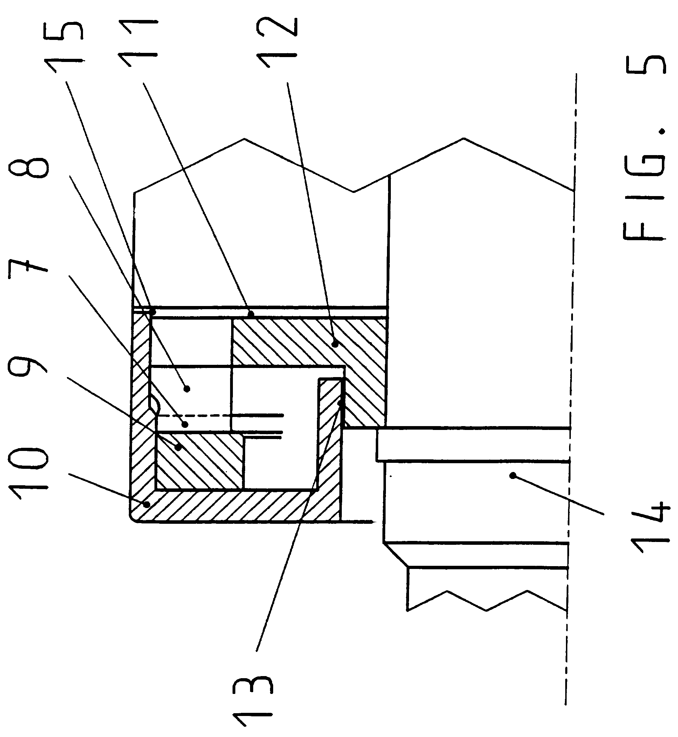

Die Fig. 5 zeigt eine gegenüber der Fig. 2 abgewandelte Ausführungsform, in der gleiche Teile mit gleichen Bezugszeichen versehen sind, so daß sie nicht erneut beschrieben werden müssen. Die Läuferdruckplatte 12 besitzt an ihrem inneren, der Welle 14 zugewandten und auf dieser aufliegenden Ende einen nach außen (in der Zeichnung nach links) weisenden Ansatz bzw. Vorsprung, der an einem auf der Welle 14 vorgesehenen Bund endet. Die Kapsel 10 besitzt ebenfalls an ihrem unteren Ende einen nach innen (in der Zeichnung nach rechts) weisenden Ansatz bzw. Vorsprung, dessen Innenumfang im Abstand vom Außenumfang der Welle 14 verläuft und dem Außenumfang des Ansatzes der Läuferdruckplatte 12 entspricht. Der Innenumfang des Ansatzes liegt also an der mit 13 bezeichneten Stelle auf dem Außenumfang des zugehörigen Ansatzes der Läuferdruckplatte 12 auf. Die Ansätze der Kapsel und der Läuferdruckplatte 12 überlappen sich. In der aus Fig. 5 ersichtlichen Weise schließt die Kapsel 10 an der Läuferdruckplatte 12 ab, und zwar in dem mit 13 bezeichneten Bereich. Es sind allerdings auch andere Möglichkeiten denkbar: Die Ansätze der Kapsel 10 und der Läuferdruckplatte 12 können auch auf Stoß aneinandergrenzen.

Die Kapsel 10 ist an dem Kurzschlußring 9 befestigt. An ihrem Außenumfang deckt die Kapsel 10 die Rotorstäbe 8 ab. Sie deckt ferner den Außenumfang der Läuferdruckplatte 12 und die an diesem Außenumfang befindlichen Schlitze, die den Durchtritt der Rotorstäbe 8 ermöglichen, ab. Die Kapsel 10 reicht an ihrem Außenumfang bis zu den Läuferendblechen 11. Sie umschließt den Kurzschlußring 9 mit ihrem Außenumfang und mit ihrer rechtwinklig dazu verlaufenden Stirnfläche.

Die Fig. 6 zeigt eine gegenüber den Fig. 2 und 5 abgewandelte Ausführungsform, in der wiederum gleiche Teile mit gleichen Bezugszeichen versehen sind. Die Kapsel 10 ist zweiteilig ausgebildet. Der radial äußere, in der Fig. 6 oben gezeigte Teil der Kapsel 10 befindet sich radial außerhalb der Rotorstäbe 8. Radial innerhalb der Rotorstäbe 8 schließt sich dann der innere Teil der Kapsel 10 an. Der äußere Teil und der innere Teil der Kapsel 10 überragen die äußeren Endflächen der Rotorstäbe 8. Die Kapsel 10 liegt an zwei Flächen des Kurzschlußrings an, und zwar an dessen äußerer Umfangsfläche und an dessen innerer Umfangsfläche. Der äußere Teil der Kapsel 10 liegt mit seiner Innenfläche, genauer gesagt mit dem das Ende der Rotorstäbe 8 überragenden Teil seiner Innenfläche an der Außenfläche des Kurzschlußringes 9 an. In analoger Weise liegt der die Rotorstäbe 8 überragende Teil der Außenfläche des inneren Teils der Kapsel 10 an der Innenfläche des Kurzschlußrings 9 an. Der Kurzschlußring 9 ist in dieser Weise in die Kapselung der Rotorstäbe 8 einbezogen.

Die Rotorstäbe 8 reichen über das Blechpaket des Läufers hinaus. In einem praktischen Beispiel ragen die Rotorstäbe auf beiden Seiten 60 mm über das Blechpaket hinaus. Die Passungen der Kapsel 10 an den Läuferendblechen 11 und/oder an der Welle 14 und/oder an der Läuferdruckplatte 12 und/oder an den Kurzschlußringen 9 sind derart gewählt, daß eine Gasumwälzung innerhalb des Motors nicht stattfinden kann.

## Patentansprüche

1. Elektromotor mit einem Motor-Druckgehäuse (1), in dem ein Ständer (4) eingebaut und ein Rotor (5) drehbar gelagert ist, welches mit Gas unter einem Druck zwischen 5 und 150 bar oder höher gefüllt ist,
**gekennzeichnet durch**
eine Kapsel (10), die die über das Blechpaket des Rotors (5) hinausragenden Rotorstäbe (8) antriebsseitig (AS) und/oder nebenseitig (BS) umschließt.

2. Elektromotor nach Anspruch 1, dadurch gekennzeichnet, daß die Kapsel (10) die Kurzschlußringe (9) antriebsseitig (AS) und/oder nebenseitig (BS) umschließt.

3. Elektromotor nach Anspruch 1 oder 2, dadurch gekennzeichnet, daß die Kapsel (10) an den Läuferendblechen (11) abschließt.

4. Elektromotor nach einem der vorhergehenden Ansprüche, dadurch gekennzeichnet, daß die Kapsel (10) auf der Welle (14) abschließt.

5. Elektromotor nach einem der vorhergehenden Ansprüche, dadurch gekennzeichnet, daß die Kapsel (10) an der Läuferdruckplatte (12) abschließt.

6. Elektromotor nach einem der vorhergehenden Ansprüche, dadurch gekennzeichnet, daß in betriebskaltem Zustand zwischen Motorgehäuse bzw. Motor-Druckgehäuse (1) und Ständerblechpaket (2) ein Spalt (18) vorhanden ist, der derart bemessen ist, daß sich in betriebswarmem Zustand an dieser Stelle ein Preßsitz einstellt.

7. Elektromotor nach einem der vorhergehenden Ansprüche, dadurch gekennzeichnet, daß die Läuferendbleche (11) verstärkt sind.

8. Elektromotor nach einem der vorhergehenden Ansprüche, dadurch gekennzeichnet, daß die Anlageflächen (15) für die Kapsel (10), und zwar Durchmesser und Stirnflächen, mechanisch bearbeitet sind.

9. Elektromotor nach einem der vorhergehenden Ansprüche, dadurch gekennzeichnet, daß die Kapsel (10) an der Außenseite der Rotorstäbe (8), am Umfang der Läuferdruckplatten (12) und/oder an mindestens zwei Flächen der Kurzschlußringe (9) anliegt.

10. Elektromotor nach einem der vorhergehenden Ansprüche, dadurch gekennzeichnet, daß der Rotor (5), bestehend aus Welle (14), Läuferblechpaket mit Kurzschlußkäfig (6) und Kapsel (10), glatte, mit hoher Rundlauf- und Oberflächengenauigkeit hergestellte Stirn- und Mantelflächen ohne Nuten und Lüfterschaufeln besitzt.

11. Elektromotor nach einem der vorhergehenden Ansprüche, dadurch gekennzeichnet, daß die Stirn- und Mantelflächen der Kapseln (10) und des Läuferblechpaketes (6) metallisch oder nicht-metallisch beschichtet sind.

12. Elektromotor nach einem der vorhergehenden Ansprüche, dadurch gekennzeichnet, daß das Ständerblechpaket (2) mit Preßringen (16) und eingeschweißten Klammern (17) oder einem Stahlring (17) zusammengehalten und die Spaltfläche (18) zum Motor-Druckgeäuse (1) vollflächig mechanisch bearbeitet ist.

13. Elektromotor nach einem der vorhergehenden Ansprüche, dadurch gekennzeichnet, daß das Ständerblechpaket (2) an einer Seite im Motor-Druckgehäuse (1) mit Schrauben oder mit einer formschlüssigen Verbindung befestigt ist.

14. Elektromotor nach einem der vorhergehenden Ansprüche, dadurch gekennzeichnet, daß das Motor-Druckgehäuse (1) mit glatten Außenflächen ohne Kühlrippen und ohne Kühlrohre ausgeführt ist, allerdings gegebenenfalls mit Hebevorrichtungen (Tragösen).

15. Elektromotor nach einem der vorhergehenden Ansprüche, dadurch gekennzeichnet, daß an den freien Innenseiten des Motor-Druckgehäuses eine wärmeleitende Beschichtung oder eine oberflächenvergrößernde wärmeleitende Vorrichtung vorhanden ist.

16. Elektromotor nach einem der vorhergehenden Ansprüche, dadurch gekennzeichnet, daß an der Innenseite des Motor-Druckgehäuses in einer Tasche des Ständerblechpaketes ein oder mehrere Thermometer, beispielsweise Widerstandsthermometer, eingebettet sind.

17. Elektromotor nach einem der vorhergehenden Ansprüche, dadurch gekennzeichnet, daß Verbindungsleitungen zwischen B-seitigen Überwachungs- und Steuereinrichtungen und Anschlußraum in einer zum Gehäuse offenen Nut im Ständerblechpaket verlegt sind.

18. Elektromotor nach einem der vorhergehenden Ansprüche, dadurch gekennzeichnet, daß an den Lagern, Lagerschilden (27), Kapseln (10) und Anschlußraum (21) Druckausgleichseinrichtungen (13, 19) vorhanden sind.

19. Elektromotor nach einem der vorhergehenden Ansprüche, dadurch gekennzeichnet, daß das Motor-Druckgeäuse derart gasund wasserdicht ausgeführt ist, daß der Gasdruck innerhalb des Gehäuses höher sein kann als der Außendruck und daß auch der Wasserdruck außerhalb des Gehäuses größer sein kann als der Gasinnendruck.

20. Elektromotor nach einem der vorhergehenden Ansprüche, dadurch gekennzeichnet, daß das Motor-Druckgehäuse mit Schutzgas oder mit einem Fördermedium, beispielsweise Erdgas, gefüllt ist.

21. Elektromotor nach einem der vorhergehenden Ansprüche, dadurch gekennzeichnet, daß er ein Asynchronmotor mit Käfigläufer ist.

22. Elektromotor nach einem der vorhergehenden Ansprüche, dadurch gekennzeichnet, daß das Motor-Druckgehäuse in Verbindung mit dem Getriebegehäuse und dem Gehäuse der angetriebenen Maschine eine Einheit bildet.

23. Elektromotor nach einem der vorhergehenden Ansprüche, dadurch gekennzeichnet, daß er zum Antrieb eines Kompressors oder einer Pumpe oder eines Separators ausgeführt ist.

24. Elektromotor nach einem der vorhergehenden Ansprüche, dadurch gekennzeichnet, daß zwischen Motor und Getriebe oder Gehäuse der angetriebenen Maschine eine druckdichte Platte (Fig. 4; 28) und eine Dichtung (29) eingebaut sind.

## Claims

1. Electric motor having a pressurized motor housing (1) in which a stator (4) is fitted and a rotor (5) is mounted such that it can rotate, which housing is filled with gas at a pressure of between 5 and 150 bar or more, characterized by
a capsule (10) which encloses the rotor bars (8), which project beyond the laminated core of the rotor (5), at the drive (AS) and/or at the non-drive end (BS).

2. Electric motor according to Claim 1, characterized in that the capsule (10) encloses the short-circuiting rings (9) at the drive end (AS) and/or at the non-drive end (BS).

3. Electric motor according to Claim 1 or 2, characterized in that the capsule (10) ends at the rotor end plates (11).

4. Electric motor according to one of the preceding claims, characterized in that the capsule (10) ends on the shaft (14).

5. Electric motor according to one of the preceding claims, characterized in that the capsule (10) ends at the rotor pressure plate (12).

6. Electric motor according to one of the preceding claims, characterized in that there is a gap (18) between the motor housing or the pressurized motor housing (1) and the laminator stator core (2) in the cold operating state, the size of which gap is such that a push fit is produced at this point in the hot operating state.

7. Electric motor according to one of the preceding claims, characterized in that the rotor end plates (11) are reinforced.

8. Electric motor according to one of the preceding claims, characterized in that the contact surfaces (15) for the capsule (10), to be precise the diameter and end surfaces, are mechanically machined.

9. Electric motor according to one of the preceding claims, characterized in that the capsule (10) rests against the outside of the rotor bars (8), against the circumference of the rotor pressure plates (12), and/or against at least two surfaces of the short-circuiting rings (9).

10. Electric motor according to one of the preceding claims, characterized in that the rotor (5) comprising the shaft (14), the laminated rotor core with the squirrel cage (6), and the capsule (10), has smooth end surfaces and envelope surfaces, which are produced with a high roundness and surface accuracy, without any slots or fan blades.

11. Electric motor according to one of the preceding claims, characterized in that the end surfaces and envelope surfaces of the capsules (10) and of the laminated rotor core (6) are coated metallically or non-metallically.

12. Electric motor according to one of the preceding claims, characterized in that the laminated stator core (2) is held together by wraparound rings (16) and welded-in brackets (17) or a steel ring (17), and the gap surface (18) to the pressurized motor housing (1) is mechanically machined over the entire surface.

13. Electric motor according to one of the preceding claims, characterized in that the laminated stator core (2) is secured on one side in the pressurized motor housing (1) by screws or by a positively-locking joint.

14. Electric motor according to one of the preceding claims, characterized in that the pressurized motor housing (1) is designed with smooth outer surfaces without any cooling ribs or cooling tubes, but with lifting devices if required (lifting eyes).

15. Electric motor according to one of the preceding claims, characterized in that there is a thermally conductive coating, or a thermally conductive device, which increases the surface area, on the free insides of the pressurized motor housing.

16. Electric motor according to one of the preceding claims, characterized in that one or more thermometers, for example resistance thermometers, is or are embedded in a pocket in the laminated stator core, on the inside of the pressurized motor housing.

17. Electric motor according to one of the preceding claims, characterized in that the connecting lines between the monitoring and control devices at the non-drive end and the connection space are laid in a slot, which is open towards the housing, in the laminated stator core.

18. Electric motor according to one of the preceding claims, characterized in that there are pressure equalizing devices (13, 19) on the bearings, bearing plates (27), capsules (10), and connection space (21).

19. Electric motor according to one of the preceding claims, characterized in that the pressurized motor housing is designed to be gas-tight and waterproof in such a manner that the gas pressure within the housing can be higher than the external pressure, and in such a manner that the water pressure outside the housing can also be greater than the internal gas pressure.

20. Electric motor according to one of the preceding claims, characterized in that the pressurized motor housing is filled with inert gas or with a medium to be conveyed, for example natural gas.

21. Electric motor according to one of the preceding claims, characterized in that said motor is an asynchronous motor with a squirrel-cage rotor.

22. Electric motor according to one of the preceding claims, characterized in that the pressurized motor housing forms a unit in conjunction with the transmission housing and the housing of the driven machine.

23. Electric motor according to one of the preceding claims, characterized in that said motor is designed for driving a compressor or a pump or a separator.

24. Electric motor according to one of the preceding claims, characterized in that a pressure-tight plate (Fig. 4; 28) and a seal (29) are fitted between the motor and the transmission or housing of the driven machine.

## Revendications

1. Moteur électrique avec un boîtier de moteur sous pression (1) dans lequel est monté un stator (4) et dans lequel est logé de façon rotative un rotor (5), qui est rempli d'un gaz sous une pression comprise entre 5 et 150 bar ou plus, caractérisé par une capsule (10) qui entoure les barres de rotor (8) faisant saillie sur l'empilage des tôles du rotor (5) côté entraînement (AS) et/ou côté secondaire (BS).

2. Moteur électrique selon la revendication 1, caractérisé en ce que la capsule (10) entoure les bagues court-circuitées (9) côté entraînement (AS) et/ou côté secondaire (BS).

3. Moteur électrique selon la revendication 1 ou 2, caractérisé en ce que la capsule (10) se termine aux tôles rotoriques d'extrémité (11).

4. Moteur électrique selon l'une des revendications précédentes, caractérisé en ce que la capsule (10) se termine à l'arbre (14).

5. Moteur électrique selon l'une des revendications précédentes, caractérisé en ce que la capsule (10) se termine à la plaque de pression rotorique (12).

6. Moteur électrique selon l'une des revendications précédentes, caractérisé en ce qu'il existe à l'état froid de fonctionnement entre le boîtier du moteur et, respectivement le boîtier de moteur sous pression (1) et l'empilage des tôles de stator (2) une fente (18) qui est dimensionnée de façon qu'à l'état chaud de fonctionnement il se produise à cet endroit un ajustage serré.

7. Moteur électrique selon l'une des revendications précédentes, caractérisé en ce que les tôles rotoriques d'extrémité (11) sont renforcées.

8. Moteur électrique selon l'une des revendications précédentes, caractérisé en ce que les surfaces d'application (15) pour la capsule (10), à savoir le diamètre et les surfaces frontales, sont traitées mécaniquement.

9. Moteur électrique selon l'une des revendications précédentes, caractérisé en ce que la capsule (10) s'applique au côté extérieur des barres rotoriques (8), au pourtour des plaques de pression rotoriques (12) et/ou à au moins deux surfaces des bagues court-circuitées (9).

10. Moteur électrique selon l'une des revendications précédentes, caractérisé en ce que le rotor (5) constitué de l'arbre (14), de l'empilage de tôles rotoriques avec cage de court-circuit (6) et capsule (10) possède des surfaces frontales et d'enveloppe lisses, réalisées avec une précision élevée de rond et de surface, sans rainures et pales d'aération.

11. Moteur électrique selon l'une des revendications précédentes, caractérisé en ce que les surfaces frontales et d'enveloppe des capsules (10) et de l'empilage de tôles rotoriques (6) sont recouvertes d'une couche métallique ou non métallique.

12. Moteur électrique selon l'une des revendications précédentes, caractérisé en ce que l'empilage de tôles de stator (2) est maintenu ensemble par des bagues de pression (16) et des pinces introduites par soudage (17) ou un anneau en acier (17), et que la surface de la fente (18) vers le boîtier sous pression du moteur (1) est traitée mécaniquement sur toute sa surface.

13. Moteur électrique selon l'une des revendications précédentes, caractérisé en ce que l'empilage des tôles de stator (2) est fixé à un côté dans le boîtier sous pression du moteur (1) avec des vis ou au moyen d'une liaison par concordance des formes.

14. Moteur électrique selon l'une des revendications précédentes, caractérisé en ce que le boîtier sous pression du moteur (1) est réalisé avec des surfaces extérieures lisses, sans ailettes de refroidissement et sans tuyaux de refroidissement, mais qu'il est pourvu le cas échéant de dispositifs de levage (anses).

15. Moteur électrique selon l'une des revendications précédentes, caractérisé en ce qu'il est prévu aux côtés intérieurs libres du boîtier sous pression du moteur un revêtement conduisant la chaleur ou un dispositif conduisant la chaleur agrandissant la surface.

16. Moteur électrique selon l'une des revendications précédentes, caractérisé en ce que sont noyés, au côté intérieur du boîtier sous pression du moteur, dans une poche de l'empilage de tôles de stator un ou plusieurs thermomètres, par exemple des thermomètres à résistance.

17. Moteur électrique selon l'une des revendications précédentes, caractérisé en ce que des conduits de liaison sont disposés entre des dispositifs de surveillance et de commande côté B et la pièce de raccordement dans une rainure ouverte vers le boîtier dans l'empilage de tôles de stator.

18. Moteur électrique selon l'une des revendications précédentes, caractérisé en ce que des dispositifs de compensation de pression (13, 19) sont prévus aux paliers, aux flasques (27), aux capsules (10) et à la pièce de raccordement (21).

19. Moteur électrique selon l'une des revendications précédentes, caractérisé en ce que le boîtier sous pression du moteur est réalisé de manière étanche au gaz et à l'eau de façon que la pression du gaz à l'intérieur du boîtier peut être plus élevée que la pression extérieure, et que de même la pression d'eau à l'extérieur du boîtier peut être plus grande que la pression intérieure du gaz.

20. Moteur électrique selon l'une des revendications précédentes, caractérisé en ce que le boîtier sous pression du moteur est rempli de gaz de protection ou d'un milieu de transport, par exemple de gaz naturel.

21. Moteur électrique selon l'une des revendications précédentes, caractérisé en ce que celui-ci est un moteur asynchrone avec induit à cage d'écureil.

22. Moteur électrique selon l'une des revendications précédentes, caractérisé en ce que le boîtier sous pression du moteur forme une unité en liaison avec le boîtier du mécanisme de transmission et le boîtier de la machine entraînée.

23. Moteur électrique selon l'une des revendications précédentes, caractérisé en ce qu'il est réalisé pour entraîner un compresseur ou une pompe ou un séparateur.

24. Moteur électrique selon l'une des revendications précédentes, caractérisé en ce que sont montés entre le moteur et le mécanisme de transmission ou le boîtier de la machine entraînée une plaque étanche à la pression (figure 4; 28) et une garniture d'étanchéité (29).
